# EUROPEAN PATENT APPLICATION

(11) **EP 3 564 625 A1**
(43) Date of publication of application: **06.11.2019**
(21) Application number: 19172513.4
(22) Date of filing: 03.05.2019
(51) Int. Cl.: G01C 21/36

(54) **SYSTEM AND METHOD FOR A DYNAMIC MAP DISPLAY WITH ACTUAL IMAGES**

(30) Priority: 03.05.2018 US 201815970371
(71) Applicant: Visteon Global Technologies, Inc., Van Buren Township, MI 48111-5711 (US)
(72) Inventor: WILMER, Thorsten, 76646 Bruchsal (DE); AHMED, Waheed, 76744 Wörth am Rhein (DE); SCHÄFER, Alexandra, 76227 Karlsruhe (DE)
(74) Representative: MERH-IP Matias Erny Reichl Hoffmann Patentanwälte PartG mbB

(57) **Abstract**

A dynamic map display presents a dynamic image on a display screen of a vehicle. The dynamic map display includes a camera aimed at and above the horizon in front of the vehicle to capture a background image, which is transmitted to a controller via a first communications channel. A map generator within the controller generates a map image showing navigational directions. The controller also includes an image generator combining the background image with the map image as the dynamic image, which is transmitted to the display screen via a second communications channel. The background image and the map image are each complementary shaped to fill the display screen in any one of several different views and with the background image and the map image having different shapes and/or sizes. A method for generating a dynamic image is also disclosed.

## Description

### BACKGROUND

Dynamic map displays, such as the type used for vehicular navigation systems, commonly provide different viewing perspectives. Viewing perspectives representing a first-person or a perspective view including a background area outside of the map image of the region of terrain being mapped. Such background areas are generally filled with a solid color or with a static image, which may represent the sky area above the map image.

### SUMMARY

A dynamic map display presenting a dynamic image on a display screen of a vehicle is disclosed. The dynamic map display includes a camera having a field of view and capturing a background image and transmitting the background image to a controller via a first communications channel.

The controller includes a GPS receiver determining a location of the vehicle in physical space and a map generator generating a map image. The controller also includes an image generator combining the background image with the map image as the dynamic image. The dynamic image is then transmitted from the controller to the display screen via a second communications channel.

A method for generating a dynamic image by a dynamic map display is also disclosed. The method includes observing a background image by a camera; and transmitting the background image to a controller via a first communications channel. The method also includes the steps of determining a location of the vehicle in physical space by a GPS receiver; generating a map image by a map generator; and combining the background image with the map image as a dynamic image. The method proceeds with the steps of transmitting the dynamic image to the display screen via a second communications channel; and presenting the dynamic image on the display screen.

### BRIEF DESCRIPTION OF THE DRAWINGS

Further details, features and advantages of designs of the invention result from the following description of embodiment examples in reference to the associated drawings.
FIG. 1 is a schematic diagram of a dynamic map display in accordance with the present disclosure;
FIG. 2 is a block diagram of a controller of the dynamic map display;
FIG. 3 is an example of a dynamic image having a tilted top view;
FIG. 4 is an example of a dynamic image having a perspective view from above and behind a vehicle;
FIG. 5 is an example of a dynamic image having a first-person perspective; and
FIG. 6 is a flow chart of steps in a method for generating a dynamic image.

### DETAILED DESCRIPTION

Recurring features are marked with identical reference numerals in the figures, in which a dynamic map display **10** presenting a dynamic image **20** on a display screen **22** of a vehicle **12** is disclosed. The display screen **22** may be an LCD or OLED or similar display, and may be part of an infotainment or navigation system mounted on or in the dashboard of the vehicle **12**. Two or more display screens **22** may be configured to display the dynamic image **20**. For example, multiple passengers within a car, truck, bus, train, or aircraft may have an infotainment display screen **22** mounted nearby, and which is capable of displaying the dynamic image **20.** Such infotainment displays may be mounted in the headrest or seatback of a seat in front of another seat within the vehicle. The display screen **22** may also take other forms such as, for example, a head-up display (HUD).

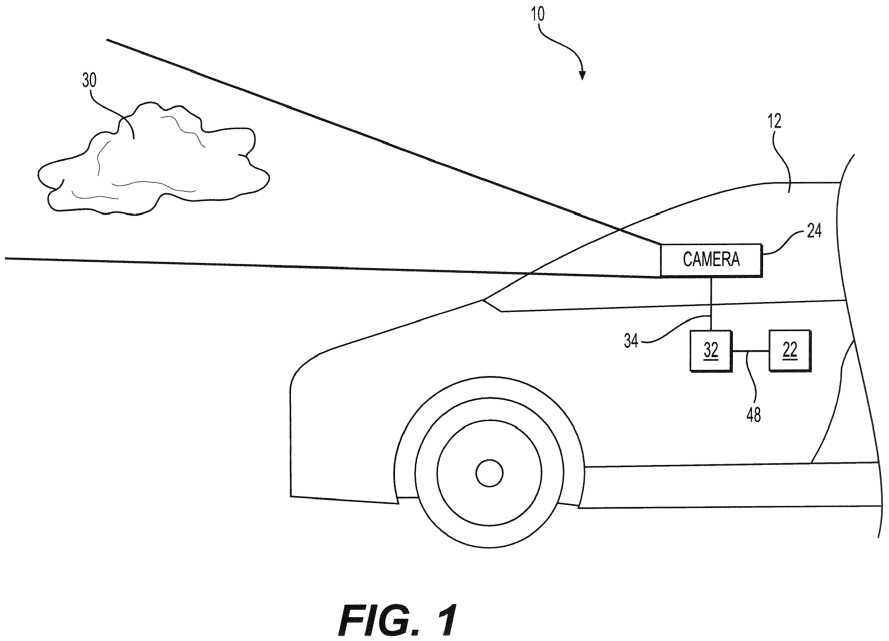

As shown in FIG. 1, the dynamic map display **10** includes a camera **24** having a field of view **26** and capturing a background image **28** including one or more objects **30**, such as the sky, clouds, overhead lights, tall buildings, etc.. The field of view **26** is aimed at and above the horizon in front of the vehicle **12** so the background image **28** includes the sky and other terrain or objects **30** above the level of the horizon.

The camera **24** is in a communication with a controller **32** via a first communications channel **34** to transmit the background image **28** thereto. The first communications channel **34** may be wired or wireless or a combination thereof and may transmit the background image **28** via a digital or analog signal.

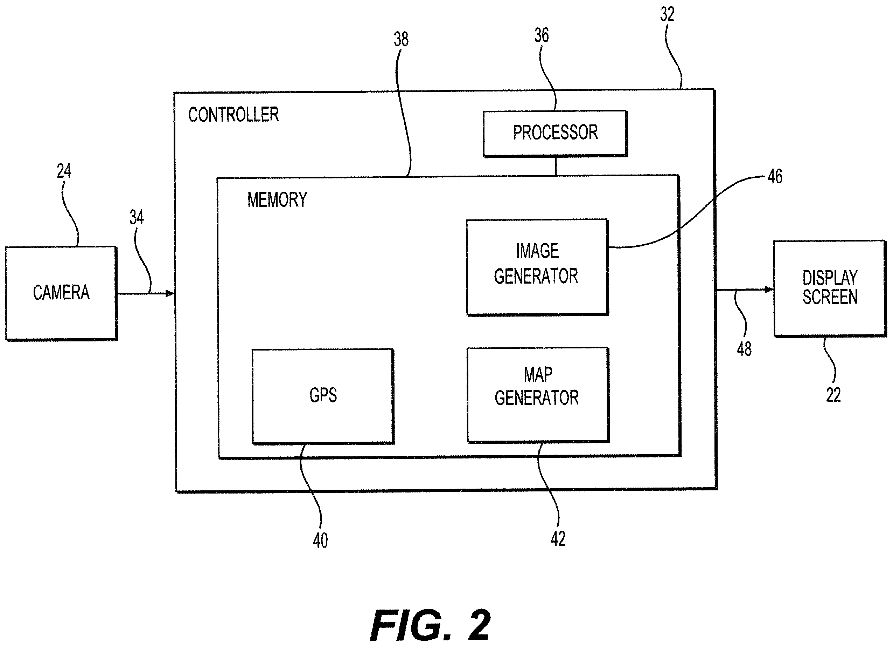

As best shown in FIG. 2, the controller **32** includes a processor **36** and a computer readable non-transitory memory **38** storing instructions for execution by the processor **36** to allow the controller to perform a number of different functions. The controller **32** includes a GPS receiver **40** for determining a location of the vehicle in physical space. The GPS receiver **40** may include a combination of hardware and software in the form of the instructions within the memory **38.**

The controller **32** also includes a map generator **42** to generate a map image **44** showing navigational directions **45**, and which may be realized in software instructions stored in the memory **38** for execution by the processor **36**. The controller **32** also includes an image generator **46** for combining the background image **28** with the map image **44** as the dynamic image **20**. The image generator **46** may also take the form of software instructions stored in the memory **38** for execution by the processor **36**. As shown in FIG. 1, the controller **32** transmits the dynamic image **20** to the display screen **22** via a second communications channel **48** extending therebetween. The second communications channel **48** may be wired or wireless or a combination thereof and may transmit the dynamic image **20** by an analog or digital signal.

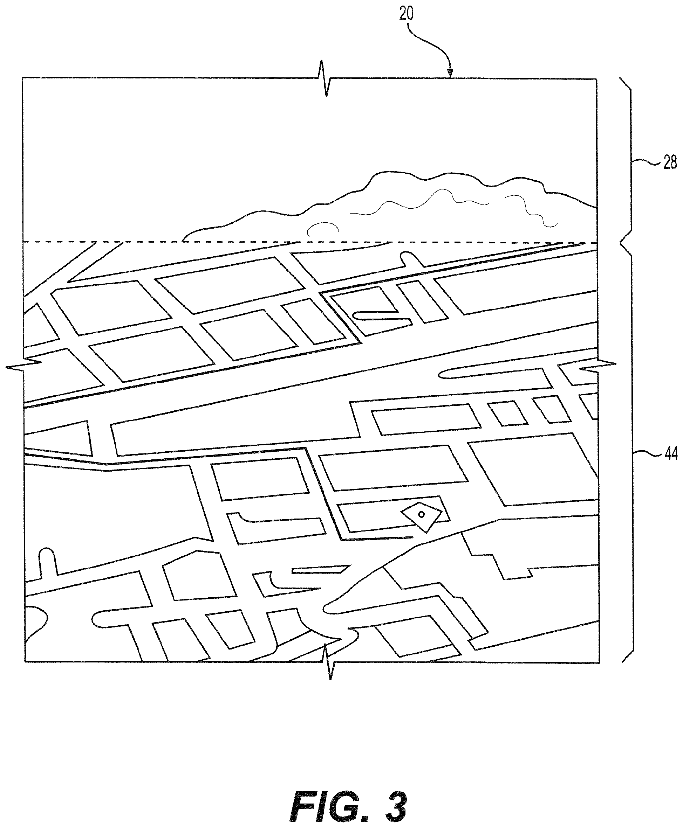

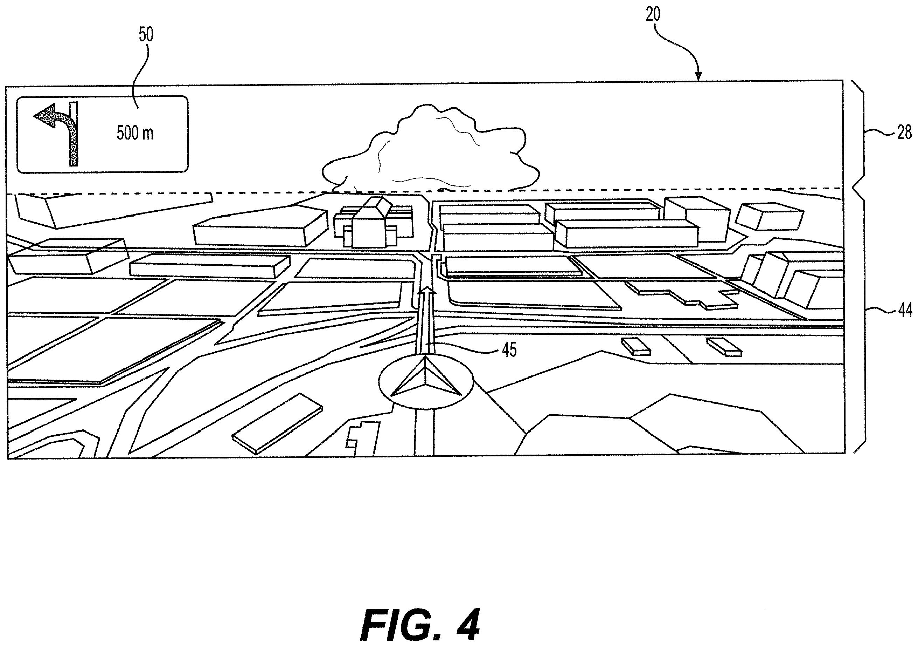

According to an aspect, the background image **28** and the map image **44** are each complementary shaped to fill the display screen **22**. For example, as shown in FIGS. 3, and 4, each of the background image **28** and the map image **44** are rectangular. Other complementary shapes may be used such as more complex cut-outs which may be dynamically determined, for example, where a portion of the display screen **22** representing one or more roads in front of the vehicle may be part of the map image **44**, and other regions above and beside the road may be filled with the background image **28**.

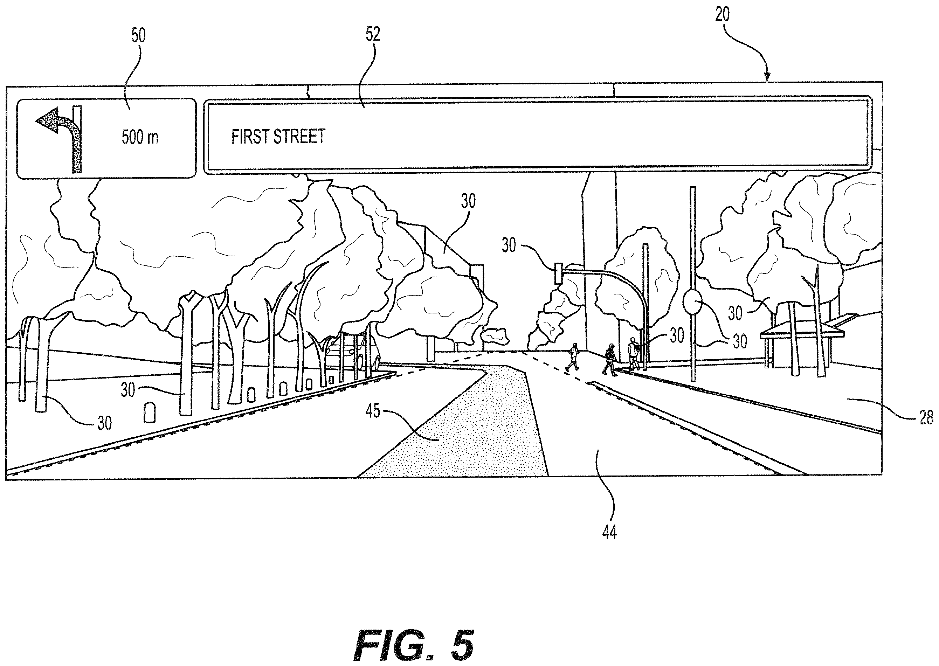

As shown in FIG. 3, the map image **44** may be formed as a tilted top view, which is also known as a 2.5D image, and which may be generated by simple scaling of a 2-dimensional image. As shown in FIG. 4, the map image **44** may have a perspective view from above and behind the vehicle. Such a map image **44** may be formed by overlying 3-dimensional objects, such as buildings, on a 2.5D image such as the one shown in FIG. 3. Alternatively, the map image **44** may have a first-person perspective, which is also called a first-person-view (FPV). An example of a FPV map image **44** is shown in FIG. 5. Such an FPV map image **44** is preferably limited to only the area of road ahead and visible to the vehicle **12**. The remaining area outside of the map image **44** may then be filled with filled with the background image **28** to create a realistic scene, and which includes objects **30** such as, for example, trees, buildings, pedestrians, traffic signals, and street signs.

As shown in FIG. 5, the dynamic image **20** includes a first region **50** containing information relating to navigation such as a graphic representation of the next turn in following a route, and a distance to that turn. The dynamic image **20** also includes a second region **52** additional containing information relating to navigation such as the name of the street or highway of the next turn to aid a driver in determining the actions to take to navigate the vehicle **12** to a destination.

As shown in FIGS. 4 and 5, the map image **44** includes overlaid graphics of navigational directions **45**, which are shown as arrows or pathways that are colored or illuminated to show a pathway to follow or directions for the vehicle to perform in order to navigate along a route to a predetermined destination location.

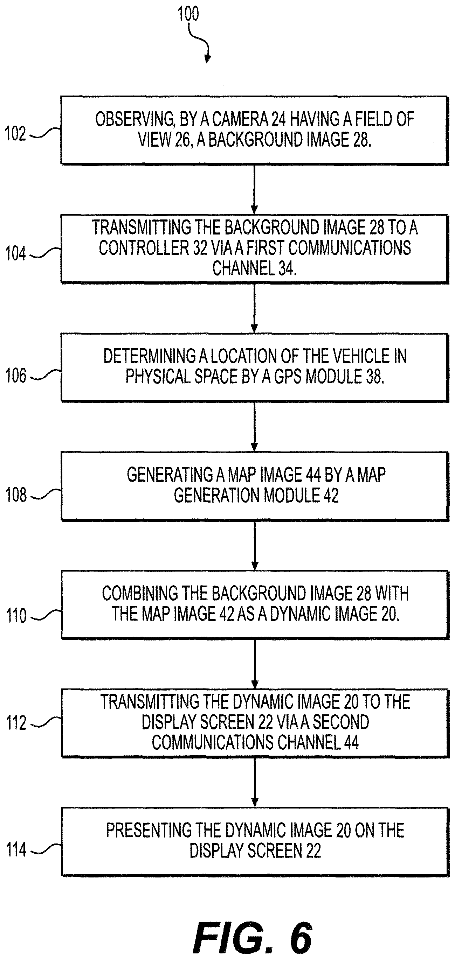

As illustrated in the flow chart of FIG. 6, a method **100** for generating a dynamic image **20** by a dynamic map display is also provided. The method **100** includes the steps of **102** observing, by a camera **24** having a field of view **26**, a background image **28**.

The method **100** also includes **104** transmitting the background image **28** to a controller **32** via a first communications channel **34**. The background image **28** may be transmitted as a digital or analog channel, and the first communications channel **34** may be wired or wireless. The background image **28** may be updated rapidly, such as by being a video signal. The background image **28** may alternatively be updated only sporadically, such as in response to a major change. Reducing the frequency of updating the background image **28** may be useful, for example, to prevent driver distraction due to the background image **28** being rapidly switched, and may prevent unsafe behaviors such as a driver's use of the background image **28** for driving.

The method **100** also includes **106** determining a location of the vehicle in physical space by a GPS receiver **40.** This step **106** may be accomplished by a combination of hardware, such as a GPS receiver or other radio receiver, and one or more software modules, which may run on the processor **36** of the controller **32**.

The method **100** also includes **108** generating a map image **44** by a map generator **42**. Examples of map images **44** are shown in FIGS. 3-5. The map image **44** may include navigational directions **45**, which may take the form of, for example, arrows or pathways that are colored or illuminated to show a pathway through the map and/or turns or other maneuvers for the driver to perform to follow the recommended directions to navigate to a predetermined destination location.

The method **100** also includes **110** combining the background image **28** with the map image **44** as a dynamic image **20**. This step **110** is preferably performed by an image generator **46** of the controller **32**, which is illustrated in FIG. 2.

The method **100** also includes **112** transmitting the dynamic image **20** to the display screen **22** via a second communications channel **48**. The dynamic image **20** may be transmitted as a digital or analog channel, and the second communications channel **48** may be wired or wireless.

The method **100** also includes **114** presenting the dynamic image **20** on the display screen **22**. The display screen **22** may be a flat-screen display such as an LCD or OLED display. Alternatively, the step of **114** presenting the dynamic image **20** on the display screen **22** may involve projecting the dynamic image **20** on a projection surface or as a virtual image, for example, as a head-up display. The dynamic image **20** may be updated rapidly, such as by being a video signal. The dynamic image **20** may alternatively be updated occasionally or at irregular intervals, such as in response to a major change. For example, the dynamic image **20** may update only after the image becomes more than 10% brighter or 10% dimmer and/or not more often than once every 5s or once per minute. Reducing the frequency of updates of the dynamic image **20** may be useful, for example, to prevent driver distraction due to the dynamic image **20** rapidly changing.

The system, methods and/or processes described above, and steps thereof, may be realized in hardware, software or any combination of hardware and software suitable for a particular application. The hardware may include a general purpose computer and/or dedicated computing device or specific computing device or particular aspect or component of a specific computing device. The processes may be realized in one or more microprocessors, microcontrollers, embedded microcontrollers, programmable digital signal processors or other programmable device, along with internal and/or external memory. The processes may also, or alternatively, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices as well as heterogeneous combinations of processors processor architectures, or combinations of different hardware and software, or any other machine capable of executing program instructions.

Thus, in one aspect, each method described above and combinations thereof may be embodied in computer executable code that, when executing on one or more computing devices performs the steps thereof. In another aspect, the methods may be embodied in systems that perform the steps thereof, and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

Obviously, many modifications and variations of the present invention are possible in light of the above teachings and may be practiced otherwise than as specifically described while within the scope of the appended claims.

## Claims

1. A dynamic map display presenting a dynamic image on a display screen of a vehicle comprising:
a camera having a field of view and capturing a background image and transmitting the background image to a controller via a first communications channel;
the controller including a GPS receiver determining a location of the vehicle in physical space and a map generator generating a map image and an image generator combining the background image with the map image as the dynamic image;
a second communications channel to transmit the dynamic image from controller to the display screen.

2. The dynamic map display as set forth in Claim 1, wherein each of the background image and the map image are complementary shaped to fill the display screen.

3. The dynamic map display as set forth in Claim 2, wherein each of the background image and the map image are rectangular.

4. The dynamic map display as set forth in Claim 1, wherein the map image is formed as a tilted top view.

5. The dynamic map display as set forth in Claim 1, wherein the map image has a perspective view from above and behind the vehicle.

6. The dynamic map display as set forth in Claim 1, wherein the map image has a first-person view perspective.

7. The dynamic map display as set forth in Claim 1, wherein the field of view is generally aimed above the horizon in front of the vehicle.

8. The dynamic map display as set forth in Claim 1, wherein the controller includes a processor and a computer readable non-transitory memory.

9. The dynamic map display as set forth in Claim 8, wherein the computer readable non-transitory memory stores instructions for execution by the processor to cause the processor to function as the GPS receiver.

10. The dynamic map display as set forth in Claim 8, wherein the computer readable non-transitory memory stores instructions for execution by the processor to cause the processor to function as the map generator.

11. The dynamic map display as set forth in Claim 8, wherein the computer readable non-transitory memory stores instructions for execution by the processor to cause the processor to function as the image generator.

12. A method for generating a dynamic image by a dynamic map display comprising:
observing a background image by a camera;
transmitting the background image to a controller via a first communications channel;
determining a location of the vehicle in physical space by a GPS receiver;
generating a map image by a map generator;
combining the background image with the map image as a dynamic image;
transmitting the dynamic image to the display screen via a second communications channel; and
presenting the dynamic image on the display screen.
